# EUROPEAN PATENT SPECIFICATION

(11) **EP 4 221 153 B1**
(45) Date of publication and mention of the grant of the patent: **31.12.2025**
(21) Application number: 21874408.4
(22) Date of filing: 27.09.2021
(51) Int. Cl.: H04L 67/60, G06F 9/455, G06F 9/48, G06F 9/50, H04L 67/125, H04L 67/51, H04L 67/52, H04L 67/61, H04M 1/72403

(54) **METHOD, APPARATUS AND SYSTEM FOR SCHEDULING COMPUTING INSTANCE**
VERFAHREN, VORRICHTUNG UND SYSTEM ZUR PLANUNG VON RECHENINSTANZEN
PROCÉDÉ, APPAREIL ET SYSTÈME DE PLANIFICATION D'INSTANCES DE CALCUL

(30) Priority: 29.09.2020 CN 202011051663
(43) Date of publication of application: 02.08.2023
(73) Proprietor: Huawei Cloud Computing Technologies Co., Ltd., Guizhou 550025 (CN)
(72) Inventor: WANG, Nannan, Shenzhen, Guangdong 518129 (CN); XU, Yang, Shenzhen, Guangdong 518129 (CN)
(74) Representative: Thun, Clemens
(86) International application number: PCT/CN2021/120818
(87) International publication number: WO 2022/068748

(56) References cited:
- WO-A1-2013/082742
- CN-A- 102 917 077
- CN-A- 103 995 748
- CN-A- 110 266 744
- CN-A- 111 131 440
- US-A1- 2013 174 174
- US-A1- 2017 195 173
- US-B1- 10 387 179

## Description

### TECHNICAL FIELD

This application relates to the field of communications technologies, and in particular, to a method, an apparatus, and a system for scheduling a compute instance.

### BACKGROUND

Development of technologies such as artificial intelligence (artificial intelligence, AI), virtual reality (virtual reality, VR), augmented reality (augmented reality, AR), and three-dimensional reconstruction (3d reconstruction, 3D), and in-depth research on deep learning and computer vision greatly enrich application scenarios of terminal devices. These technologies involve a large quantity of image computing and AI algorithms. To enable these technologies, many terminal devices need to be configured with computing resources of a high-performance central processing unit (Central Processing Unit, CPU), a graphics processing unit (Graphics Processing Unit, GPU), and a neural network processor (Neural-network Processing Unit, NPU), to meet increasing computing requirements of the terminal devices. However, these high-performance computing devices severely affect power consumption of the terminal devices.

Some terminal devices, for example, a smartphone and a wearable device, that have requirements on a volume and power consumption are apparently limited during configuration of computing devices.

In addition, with continuous improvement of functions and increasing computing complexity, many AI, VR/AR, and 3D applications have stricter requirements on computing capabilities and real-time performance. Therefore, even a terminal device with a high configuration has to make a lot of sacrifices and tailoring for the sake of application effect and functions, thereby greatly degrading user experience.

However, some terminal devices with low configurations can hardly run such applications due to limited computing capabilities.

Therefore, how to implement functions of applications (for example, the foregoing applications) having a high computing requirement on terminal devices with various configurations is a problem that urgently needs to be resolved in this field.
Further, US 2017/195173 A1 refers to a resource manager of a virtualized computing service indicating to a client that FPGA-enabled compute instances are supported at the service. From a set of virtualization hosts of the service, a particular host from which an FPGA is accessible is selected for the client based on an indication of computation objectives of the client. Configuration operations are performed to prepare the host for the application, and an FPGA-enabled compute instance is launched at the host for the client.
Further, US 10 387 179 B1 refers to scheduling tasks to a plurality of computing nodes, such as physical computers and virtual machine instances. Based on operational parameters of the computing nodes and process parameters of the compute tasks to be executed, one or more of the computing nodes can be selectively clustered to compute tasks in an optimized manner. As an example, the order in which the tasks are executed can be determined to maintain the optimization of the task execution.

### SUMMARY

Embodiments of this application provide a method for scheduling a compute instance and an apparatus. A compute instance deployed on a far-side site is scheduled and used to implement some processing tasks of an application (application, APP) running on a terminal device, so that a service with a high computing requirement is unbound from computing performance of the terminal device, thereby providing unlimited possibilities for a computing terminal. This problem is solved by the subject matter of the independent claims. Further implementation forms are provided in the dependent claims. The following aspects provided in the summary are of exemplary nature and are not to be construed as limiting the scope of the invention, which is defined by the appended claims.

According to a first aspect, an embodiment of this application provides a method for scheduling a compute instance. The method may be performed by a client installed on a terminal device. The client is an application client corresponding to a cloud resource scheduling system, or may be a client component that is integrated into each application APP running on the terminal device and that is corresponding to the cloud resource scheduling system. A product form of the client is not limited in this application.

The method includes: obtaining, by the client, resource requirement information of the application APP running on the terminal device, where the resource requirement information is used to indicate a resource requirement of the APP; sending, by the client, the resource requirement information to a cloud resource scheduling system; receiving, by the client, resource allocation information from the cloud resource scheduling system, where the resource allocation information includes information about at least one compute instance allocated by the cloud resource scheduling system based on the resource requirement information, and the at least one compute instance is deployed on at least one far-side site managed by the cloud resource scheduling system; and sending, by the client during running of the APP, some processing tasks of the APP to the at least one compute instance, and receiving results of processing the some processing tasks of the APP by the at least one compute instance.

According to this design, the client installed on the terminal device may send the resource requirement information of the application APP to the cloud resource scheduling system, so that the cloud resource scheduling system performs resource scheduling on the APP based on the resource requirement information, and allocates, to the APP, the at least one compute instance that can implement the some processing tasks of the APP. This unbinds a service with a high computing requirement from computing performance of the terminal device, thereby providing unlimited possibilities for a computing terminal.

In an optional implementation, the obtaining, by the client, resource requirement information of the APP includes: obtaining, by the client, compute instance configuration data of the APP, and obtaining the resource requirement information, where the resource requirement information includes at least one of a type of a compute instance, configuration information of a compute instance, and a quantity of required compute instances.

According to this design, the client can accurately obtain the resource requirement information of the APP by using the related configuration data of the APP. In this way, when the cloud resource scheduling system performs resource scheduling on the APP based on the resource requirement information, a more appropriate compute instance can be allocated to the APP, thereby ensuring service implementation of the APP.

In an optional implementation, the obtaining, by the client, the resource requirement information based on compute instance configuration data of the APP includes: determining, by the client, that cloud resource enabling information is configured in the APP, and obtaining the resource requirement information based on the cloud resource enabling information and the compute instance configuration data of the APP.

According to this design, the client may determine, based on whether the cloud resource enabling information is configured in the APP, whether the APP has a cloud service requirement, and then obtain the resource requirement information of the APP based on the cloud resource enabling information. In actual application, an APP developer may configure cloud resource enabling information for an APP when developing the APP, or an APP developer may provide, for a terminal user, a cloud service function that can be configured by the terminal user, and configure the cloud resource enabling information when the terminal user decides to enable the cloud service function. This is not limited in this application.

In an optional implementation, the determining, by the client, that cloud resource enabling information is configured in the APP, and obtaining the resource requirement information based on the cloud resource enabling information and the compute instance configuration data of the APP includes: sending, by the client, a cloud service request to the cloud resource scheduling system, where the cloud service request is used to request the cloud resource scheduling system to enable a cloud service function for the APP; and after the cloud resource scheduling system enables the cloud service function for the APP, obtaining, by the client, the resource requirement information based on the compute instance configuration data of the APP.

According to this design, the client may send, to the cloud resource scheduling system, the cloud service request that carries related information of the APP (for example, an identifier of the APP and the cloud resource enabling information), so that the cloud resource scheduling system enables the cloud service function for the APP and obtains the resource requirement information of the APP from the client.

In an optional implementation, the sending, by the client, the resource requirement information to a cloud resource scheduling system includes: sending, by the client, the resource requirement information to the cloud resource scheduling system when the APP starts running; or sending, by the client, the resource requirement information to the cloud resource scheduling system when network quality of at least one previous compute instance allocated by the cloud resource scheduling system meets an access switching condition.

According to this design, when the APP starts running, the client may request the cloud resource scheduling system to allocate a compute instance, so as to access the cloud resource scheduling system based on the allocated compute instance; or when a compute instance previously allocated by the cloud resource scheduling system has a network fault, poor network quality, or the like, the client may request the cloud resource scheduling system to allocate a compute instance and switch to access, thereby ensuring implementation of the some processing tasks of the APP.

In an optional implementation, the method further includes: sending, by the client, location information of the terminal device to the cloud resource scheduling system, where the at least one compute instance is allocated by the cloud resource scheduling system based on the resource requirement information and the location information.

According to this design, when being authorized by the terminal user, the client may provide the location information of the terminal device for the cloud resource scheduling system, so that the cloud resource scheduling system allocates a far-side site and a compute instance to the APP nearby based on a location of the terminal device, to ensure quality of service when the far-side site and the compute instance implement the some processing tasks in the APP.

In an optional implementation, the resource allocation information includes information about a plurality of compute instances allocated by the cloud resource scheduling system based on the resource requirement information, and the method further includes: selecting, by the client, the at least one compute instance from the plurality of compute instances based on the information about the plurality of compute instances. In another optional implementation, the resource allocation information includes information about a plurality of compute instances allocated by the cloud resource scheduling system based on the resource requirement information, and the method further includes: sending, by the client, the information about the plurality of compute instances to the APP, so that the APP selects the at least one compute instance from the plurality of compute instances based on the information about the plurality of compute instances.

According to this design, the cloud resource scheduling system may allocate a plurality of compute instances to the APP, and the client may select the at least one compute instance from the plurality of compute instances for the APP, or the client may send the information about the plurality of compute instances to the APP, so that the APP selects the at least one compute instance from the plurality of compute instances.

In an optional implementation, the information about the at least one compute instance includes any one or more of the following: a type of a compute instance, an identifier of a compute instance, network quality information of a compute instance, and connection information of a far-side site on which a compute instance is located.

According to this design, the resource allocation information may include a type, an identifier, network quality information, connection information, and the like that are of the at least one allocated compute instance, so that a target compute instance is selected for the APP and a communication connection is established with a target site in which the target compute instance is located.

According to a second aspect, an embodiment of this application provides a method for scheduling a compute instance. The method may be performed by a cloud resource scheduling system, and a physical form of the cloud resource scheduling system may be a computer (or referred to as a processing device).

The method includes: receiving, by the cloud resource scheduling system, resource requirement information from a client, where the resource requirement information is used to indicate a resource requirement of an application APP running on a terminal device; determining, by the cloud resource scheduling system, at least one compute instance in a plurality of compute instances based on the resource requirement information, where the plurality of compute instances are deployed on at least one far-side site managed by the cloud resource scheduling system, and any compute instance is used to process some processing tasks of the APP; and sending, by the cloud resource scheduling system, resource allocation information to the client, where the resource allocation information includes information about the at least one compute instance.

In an optional implementation, the method further includes: receiving, by the cloud resource scheduling system, a cloud service request from the client, where the cloud service request includes cloud resource enabling information configured in the APP; and enabling, by the cloud resource scheduling system, a cloud service function for the APP based on the cloud resource enabling information.

In an optional implementation, the at least one far-side site is a plurality of far-side sites, and the method further includes: receiving, by the cloud resource scheduling system, location information from the client; and the determining, by the cloud resource scheduling system, at least one compute instance in a plurality of compute instances based on the resource requirement information includes: selecting, by the cloud resource scheduling system, at least one candidate site from a plurality of sites based on the resource requirement information and the location information; and determining, by the cloud resource scheduling system based on the resource requirement information, the at least one compute instance in compute instances deployed on the at least one candidate site.

According to a third aspect, an embodiment of this application provides a client, including a processing unit and a communications unit. The processing unit is configured to obtain resource requirement information of an application APP running on a terminal device, where the resource requirement information is used to indicate a resource requirement of the APP; and the communications unit is configured to: send the resource requirement information to a cloud resource scheduling system; receive resource allocation information from the cloud resource scheduling system, where the resource allocation information includes information about at least one compute instance allocated by the cloud resource scheduling system based on the resource requirement information, and the at least one compute instance is deployed on at least one far-side site managed by the cloud resource scheduling system; and during running of the APP, send some processing tasks of the APP to the at least one compute instance, and receive results of processing the some processing tasks of the APP by the at least one compute instance.

In an optional implementation, the processing unit is configured to: obtain compute instance configuration data of the APP, and obtain the resource requirement information, where the resource requirement information includes at least one of a type of a compute instance, configuration information of a compute instance, and a quantity of required compute instances.

In an optional implementation, the processing unit is configured to: determine that cloud resource enabling information is configured in the APP, and obtain the resource requirement information based on the cloud resource enabling information and the compute instance configuration data of the APP.

In an optional implementation, the processing unit sends a cloud service request to the cloud resource scheduling system by using the communications unit, where the cloud service request is used to request the cloud resource scheduling system to enable a cloud service function for the APP; and after the cloud resource scheduling system enables the cloud service function for the APP, the processing unit obtains the resource requirement information based on the compute instance configuration data of the APP.

In an optional implementation, the communications unit sends the resource requirement information to the cloud resource scheduling system when the APP starts running; or the communications unit sends the resource requirement information to the cloud resource scheduling system when network quality of at least one previous compute instance allocated by the cloud resource scheduling system meets an access switching condition.

In an optional implementation, the communications unit is further configured to send location information of the terminal device to the cloud resource scheduling system, where the at least one compute instance is allocated by the cloud resource scheduling system based on the resource requirement information and the location information.

In an optional implementation, the resource allocation information includes information about a plurality of compute instances allocated by the cloud resource scheduling system based on the resource requirement information, and the processing unit is further configured to select the at least one compute instance from the plurality of compute instances based on the information about the plurality of compute instances. In another optional implementation, the processing unit is further configured to send the information about the plurality of compute instances to the APP, so that the APP selects the at least one compute instance from the plurality of compute instances based on the information about the plurality of compute instances.

In an optional implementation, the information about the at least one compute instance includes any one or more of the following: a type of a compute instance, an identifier of a compute instance, network quality information of a compute instance, and connection information of a far-side site on which a compute instance is located.

According to a fourth aspect, an embodiment of this application provides a cloud resource scheduling system, including a communications unit and a processing unit. The communications unit is configured to receive resource requirement information from a client, where the resource requirement information is used to indicate a resource requirement of an application APP running on a terminal device; the processing unit is configured to determine at least one compute instance in a plurality of compute instances based on the resource requirement information, where the plurality of compute instances are deployed on at least one far-side site managed by the cloud resource scheduling system, and any compute instance is used to process some processing tasks of the APP; and the communications unit is further configured to send resource allocation information to the client, where the resource allocation information includes information about the at least one compute instance.

In an optional implementation, the communications unit is further configured to receive a cloud service request from the client, where the cloud service request includes cloud resource enabling information configured in the APP; and the processing unit is further configured to enable a cloud service function for the APP based on the cloud resource enabling information.

In an optional implementation, the at least one far-side site is a plurality of far-side sites, and the communications unit is further configured to receive location information from the client; and the processing unit is further configured to: select at least one candidate site from a plurality of sites based on the resource requirement information and the location information; and determine, based on the resource requirement information, the at least one compute instance in compute instances deployed on the at least one candidate site.

According to a fifth aspect, an embodiment of this application provides a terminal device, including a processor and a memory. The memory is configured to store program instructions, and the processor is configured to execute the program instructions stored in the memory, to perform the method according to any one of the possible implementations of the first aspect. The foregoing APP and the foregoing client run on the terminal device.

According to a sixth aspect, an embodiment of this application provides a computer system, including at least one computer. Each computer includes a processor and a memory, and the processor of the at least one computer executes program instructions in the memory to perform the method according to any one of the possible implementations of the second aspect. The foregoing cloud resource scheduling system runs on the computer system.

According to a seventh aspect, an embodiment of this application provides a computer storage medium. The computer storage medium stores a computer program, and the computer program is executed by a computer to perform the method according to any one of the possible implementations of the first aspect or the second aspect.

According to an eighth aspect, an embodiment of this application provides a chip system, including a processor. The processor is coupled to a memory, and the memory is configured to store a program or instructions. The chip system may further include an interface circuit, and the interface circuit is configured to receive code instructions and transmit the code instructions to the processor. When the program or the instructions are executed by the processor, the chip system implements the method in any one of the possible designs of the first aspect or the second aspect.

Optionally, there may be one or more processors in the chip system. The processor may be implemented by hardware, or may be implemented by software. When the processor is implemented by hardware, the processor may be a logic circuit, an integrated circuit, or the like. When the processor is implemented by software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

In this application, based on the implementations provided in the foregoing aspects, the implementations may be further combined to provide more implementations.

### BRIEF DESCRIPTION OF DRAWINGS

FIG. 1 is a schematic diagram of an application scenario to which a method for scheduling a compute instance is applicable according to an embodiment of this application;
FIG. 2 is a schematic flowchart of a method for scheduling a compute instance according to an embodiment of this application;
FIG. 3 is a schematic diagram of a structure of a client according to an embodiment of this application;
FIG. 4 is a schematic diagram of a structure of a cloud resource scheduling system according to an embodiment of this application; and
FIG. 5 is a schematic diagram of an apparatus according to an embodiment of this application.

### DESCRIPTION OF EMBODIMENTS

To resolve the problem mentioned in the background, the embodiments of this application provide a method for scheduling a compute instance and an apparatus, to unbind a service with a high computing requirement from computing performance of a terminal device, thereby providing unlimited possibilities for a computing terminal. The method and the apparatus are based on a same technical idea. Because a problem-resolving principle of the method is similar to that of the apparatus, mutual reference may be made to implementation of the apparatus and the method. Repeated parts are not described in detail.

In the solutions provided in the embodiments of this application, a client corresponding to a cloud resource scheduling system and one or more applications APPs that can provide an application service for a terminal user may be installed on a terminal device. The client may obtain resource requirement information of an APP and send the resource requirement information to the cloud resource scheduling system, so that the cloud resource scheduling system allocates, to the APP based on the received resource requirement information, at least one compute instance that is deployed on a far-side site and meets a requirement, and during running of the APP, some processing tasks of the APP may be sent to the at least one compute instance for processing, to obtain processing results. In this solution, an APP developer may deploy a compute instance on a far-side site, and the cloud resource scheduling system may perform resource scheduling on the APP running on the terminal device, to implement, by using the compute instance deployed on the far-side site, the some processing tasks of the APP running on the terminal device, so that various services with a high computing requirement can be implemented without a limitation of computing performance of the terminal device, and finally, a service with a high computing requirement is unbound from the computing performance of the terminal device, thereby providing unlimited possibilities for a computing terminal. In addition, according to the method, power consumption and resource occupation when the terminal device runs the APP can be significantly reduced.

In the following, some terms in this application are described, so that a person skilled in the art has a better understanding.
(1) A terminal apparatus is an apparatus that provides a service for a user and has a voice or data connection function. The terminal apparatus may also be referred to as a terminal device, or may be referred to as user equipment (user equipment, UE), a mobile station (mobile station, MS), a mobile terminal (mobile terminal, MT), or the like. The terminal apparatus may be alternatively a chip. In the following embodiments and descriptions of this application, the terminal device is used as an example for specific description.
   For example, the terminal device may be a hand-held device or a vehicle-mounted device that has a wireless connection function. Currently, for example, some terminal devices are a mobile phone (mobile phone), a tablet computer, a notebook computer, a palmtop computer, a mobile Internet device (mobile Internet device, MID), a smart point of sale (point of sale, POS), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), and various smart meters (a smart water meter, a smart electricity meter, and a smart gas meter).
(2) A service is a transaction or an activity performed or processed by the terminal device to implement some functions or services.

The service may be represented in a plurality of forms: for example, a main function service provided by the terminal device at delivery, which may be specifically a call service, a short message service, or the like; or for another example, an application (application, APP) that can be implemented by the terminal device only by downloading and installing a software program, which may be specifically a video application, a music application, a game application, an AR application, a VR application, an AI application, or the like.

Generally, one service can be implemented only through a series of processing tasks. Therefore, the service may include at least one compute instance, and each compute instance is configured to execute at least one processing task.

An AR interaction application that implements interaction between a real figure and a virtual figure is used as an example. To implement the interaction function, the application may be divided into the following processing tasks:
a1. Image capture: Acquire a scene image captured by a camera.
a2. Ground detection: Perform ground detection on the scene image to determine a location of a ground, so as to place a virtual figure on the ground of the scene image.
a3. Real figure recognition: Perform figure recognition on the scene image, to determine a real figure in the scene image.
a4. Action recognition: Perform skeletal key point detection on the real figure in the scene image, and determine a plurality of skeletal key point locations of the real figure, to determine an action of the real figure.
a5. Virtual figure generation: Generate a virtual figure, where an action of the virtual figure is the same as or corresponds to an action of the real figure.
a6. AR image generation: Perform fusion on the virtual figure and the real figure to generate an AR image, so as to display the AR image on a display of the terminal device.

Each of the foregoing processing tasks may be completed by using one compute instance.

(3) A compute instance is a software program or a computing resource that completes one or more processing tasks in a service, and may also be referred to as a computing model, a computing module, an algorithm instance, or the like. After the compute instance is run or loaded, to-be-processed data may be processed to obtain a processing result.

In the embodiments of this application, the compute instance may be any one or a combination of computing resources of different granularities such as a virtual machine, a container, a thread, and a process. The compute instance may be deployed on a far-side site. The client installed on the terminal device may send to-be-processed data of some processing tasks of the APP to the compute instance deployed on the far-side site. After processing the to-be-processed data, the compute instance returns a processing result to the client. It can be understood that, some compute instances may alternatively be deployed on the terminal device, to execute a processing task of the APP based on a local resource of the terminal device when a cloud service function of the APP is not enabled. This is not limited in this application.

(4). "A plurality of" means two or more.

(5). "At least one" means one or more.

(6). The term "and/or" describes an association relationship between associated objects and represents that three relationships may exist. For example, A and/or B may represent the following three cases: Only A exists, both A and B exist, and only B exists. The character "/" usually indicates an "or" relationship between associated objects.

In addition, it should be understood that in the descriptions of this application, terms such as "first" and "second" are merely used for distinguishing and description, but should not be understood as indicating or implying relative importance, or should not be understood as indicating or implying a sequence.

The embodiments of this application is applicable to the cloud computing field, for example, the edge cloud computing field, the public cloud computing field, or the distributed cloud computing field. The following uses an example in which the embodiments of this application are applied to the edge cloud computing field for description.

Before the embodiments of this application are described, an application scenario to which the embodiments of this application are applicable is first described.

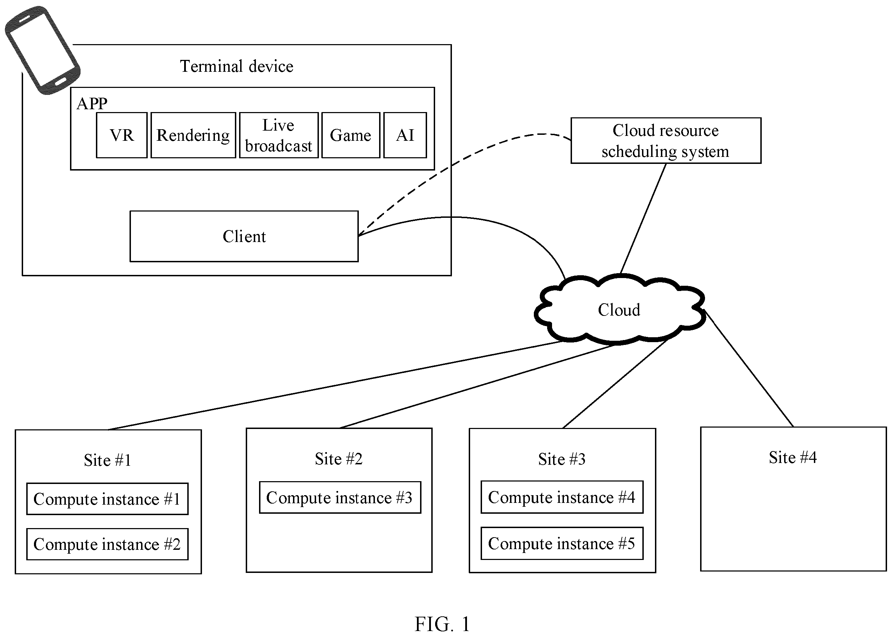

FIG. 1 is a schematic diagram of a possible application scenario to which an embodiment of this application is applicable. Referring to FIG. 1, the application scenario may include a client, a cloud resource scheduling system, and one or more far-side sites (also referred to as edge sites, and referred to as sites for short) managed by the cloud resource scheduling system.

The client (client) is a client corresponding to the cloud resource scheduling system on a cloud, and may be installed and run on a terminal device. One or more applications (application), for example, a VR APP, an AI APP, a game APP, a live broadcast APP, and a rendering APP. may be further installed or run on the terminal device. The client may send a related service request to the cloud resource scheduling system, where the related service request may carry related information of an APP, so that the cloud resource scheduling system performs resource scheduling on the APP. The cloud resource scheduling system is a computer system on the cloud, and the computer system may include at least one computer, and may respond to and process the related service request from the client.

For example, the cloud resource scheduling system may receive a cloud service request from the client, and register, based on the cloud service request, a cloud service function for an APP running on the terminal device, so as to enable the cloud service function for the APP. For example, the cloud resource scheduling system may further receive a deregistration request from the client, and deregister the cloud service function for the APP, so as to disable the cloud service function for the APP. For example, the cloud resource scheduling system may further receive resource requirement information from the client, and allocate, to the APP based on the resource requirement information, at least one compute instance that meets a related requirement in a plurality of compute instances deployed on the edge site, so that the at least one compute instance is used to process some processing tasks of the APP. For example, the cloud resource scheduling system may receive location information from the client, and may allocate the at least one compute instance to the APP nearby, thereby ensuring quality of service when the site provides an application service on the cloud for the APP.

Correspondingly, the client may receive related information from the cloud resource scheduling system, where the related information may include a related result of resource scheduling performed by the cloud resource scheduling system on the APP. For example, when requesting the cloud resource scheduling system to enable the cloud service function for the APP, the client may correspondingly receive a response message from the cloud resource scheduling system, so as to know whether the cloud resource scheduling system completes enabling of the cloud service function of the APP on the terminal device side. Alternatively, when requesting the cloud resource scheduling system to deregister the cloud service function for the APP, the client may also correspondingly receive a response message from the cloud resource scheduling system, so as to know whether the cloud resource scheduling system completes deregistration (that is, disabling) of the cloud service function of the APP. Alternatively, when requesting the cloud resource scheduling system to allocate a compute instance to the APP, the client may receive resource allocation information from the cloud resource scheduling system, where the resource allocation information includes information about at least one allocated compute instance, so as to process some processing tasks of the APP by using the at least one compute instance.

A physical form of a far-side site (site for short) may be a single computer, and the cloud resource scheduling system may manage all sites. For example, in FIG. 1, the cloud includes a site #1, a site #2, a site #3, and a site #4, and the cloud resource scheduling system may manage the site #1, the site #2, the site #3, and the site #4 in the cloud.

A compute instance is a specific software program or computing resource that is deployed on different sites and that is of a same application service. To be specific, one application service may correspond to a plurality of compute instances, and a plurality of compute instances corresponding to a same application service may be deployed on a same site or different sites. For example, in FIG. 1, a compute instance #1 and a compute instance #2 are deployed on the site #1, a compute instance #3 is deployed on the site #2, and a compute instance #4 and a compute instance #5 are deployed on the site #3.

The client may establish a communication connection to at least one edge site on which the at least one compute instance is located, and maintain a connected state. During running of the APP, the client may send some processing tasks of the APP to the at least one compute instance through a communication connection to the edge site, so as to indicate the at least one compute instance to process the some processing tasks. Correspondingly, the edge site may feed back a processing result of a compute instance to the client, so as to provide an edge application service for the APP on the terminal device side to implement a service, so that a service with a high computing requirement is unbound from computing performance of the terminal device, thereby providing unlimited possibilities for a computing terminal.

It should be noted that, in this embodiment of this application, the far-side site is merely relative to the client, and does not impose any limitation on a location, a function, and the like of the site. In actual applications, the cloud resource scheduling system and the far-side site may be deployed in a same data center.

It can be understood that, in this embodiment of this application, in a process in which the APP on the terminal device runs to implement a service, some processing tasks may be processed based on at least one target compute instance separately deployed on one edge site, or some processing tasks may be processed based on at least one target compute instance on at least one edge site. This may be specifically implemented based on a service requirement on an APP side, and is not limited in this application.

It should be noted that, the foregoing is merely an example for describing interaction between the client, the cloud resource scheduling system, and the edge site and/or implementation of a device-related function, but is not limited thereto. In specific implementation, interaction between devices may not be limited to the foregoing interaction manner, and implementation of the device-related function is not limited to the foregoing description. This is not limited in this application. In another embodiment, the cloud resource scheduling system may further implement another function. For example, the cloud resource scheduling system may be alternatively a device with an intelligent analysis function. For example, the cloud resource scheduling system may predict, by analyzing a previous request, a mirror buffer location, an access location, a required service type, and the like of a compute instance required by the APP. Therefore, after receiving a related request from the client, a corresponding result may be quickly fed back, so as to accelerate a processing speed and improve overall performance of a system. Alternatively, for example, the cloud resource scheduling system may further coordinate rapid establishment of a communication connection between a site and the client.

In addition, in this embodiment of this application, a compute instance deployed on a far-side site may be considered as a device (a peripheral for short) other than the terminal device. The method for scheduling a compute instance in this application may also be considered as a method for allocating a far-side peripheral (for example, an edge peripheral) to an APP. The client corresponding to the cloud resource scheduling system may also be divided into a peripheral discovery component, a peripheral manager component, and an end-side gateway (GW) of the client based on functions. For example, the peripheral discovery component may obtain the resource requirement information of the APP, and send the resource requirement information of the APP to the cloud resource scheduling system. The peripheral manager component may receive resource allocation information and other information from the cloud resource scheduling system and manage the far-side peripherals of the APP based on the received information. A GW of the client may establish a communication connection to a GW on the far-side site side and maintain a connected state, so as to implement transmission of some processing tasks of the APP and processing results.

Correspondingly, the far-side site may include a far-side end-side gateway (GW) and a manager (manager) component, and the far-side GW is configured to establish a bidirectional communication connection between the far-side site and the client, so that the far-side site implements application-level permission and security control on the terminal device. The manager component may manage a local resource of the far-side site, be managed and scheduled by the cloud resource scheduling system, load a compute instance, and troubleshoot the locally deployed compute instance. A service request of the client may be responded to, and the target compute instance may be started in cooperation with the client, to implement corresponding task processing, data loading, and the like. Alternatively, an agent may be separately started for the APP on an edge cloud and an edge site, so as to facilitate data interaction between the APP and a developer user that correspondingly accesses an edge cloud service.

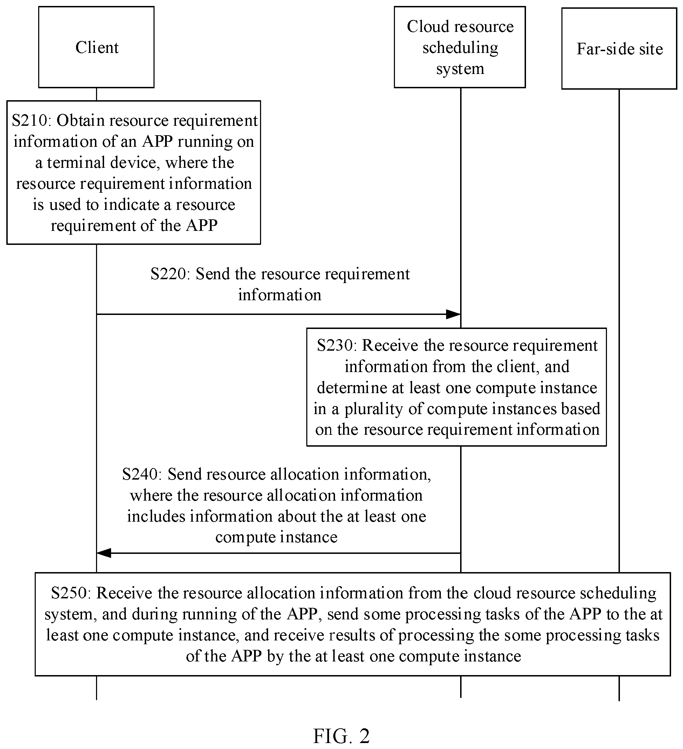

For ease of understanding, the following provides description with reference to a flowchart of a method for scheduling a compute instance shown in FIG. 2. The flowchart of the method shows an interaction process of a client, a cloud resource scheduling system, and a target site. The client and the cloud resource scheduling system are the client and the cloud resource scheduling system in FIG. 1, and the target site is at least one site on which at least one compute instance allocated by the cloud resource scheduling system is located. As shown in FIG. 2, the method includes the following steps:
S210: The client obtains resource requirement information of an application APP running on a terminal device, where the resource requirement information is used to indicate a resource requirement of the APP.

In this embodiment of this application, when developing the APP, an APP developer may configure an application service function on a cloud (that is, a cloud service function) for the APP, and configure, in an SDK of the APP, compute instance configuration data required when the APP enables the cloud service function, and may further deploy, on a related site, a compute instance for implementing the cloud service function. After the APP is installed on the terminal device, the APP may perform backend registration with the client to enable the cloud service function, and request the cloud resource scheduling system to perform resource scheduling on the APP.

The client is a client corresponding to the cloud resource scheduling system. The client may be an independent application client, or may be integrated into an application framework or an SDK of each APP. This is not limited in this application. It can be understood that, due to a difference between product forms of the client, information exchange between the client and the APP is also different. When the client is an independent client, or is integrated into an application framework or an SDK of the APP, or has another product form, related information of the APP may be obtained in any manner that is suitable for the client. This is not limited in this application.

In this embodiment of this application, the cloud service function of the APP may be configured to be enabled through automatic triggering or manual triggering, or enabled in another triggering manner. This is not limited in this application. For example, if the cloud service function of the APP is configured to be enabled through automatic triggering, it may be considered that when the APP is installed on the terminal device, an edge service function needs to be enabled for the APP by default. If the cloud service function of the APP is configured to be enabled through manual triggering, it may be considered that when the APP is installed on the terminal device and a terminal user on the terminal device side manually sets and enables a related configuration item, it is considered that the APP needs to enable the edge service function.

If the APP needs to enable the cloud service function, the APP may perform backend registration with the client based on cloud resource enabling information of the APP. The cloud resource enabling information may include, for example, an identifier, an enable identifier (enable ID), or configuration item information of the APP. After determining that the cloud resource enabling information is configured in the APP, the client may send a cloud service request to the cloud resource scheduling system, where the cloud service request may carry the cloud resource enabling information of the APP, to request the cloud resource scheduling system to enable the cloud service function for the APP. After receiving the cloud service request from the client, the cloud resource scheduling system registers the cloud service function for the APP, to enable the cloud service function for the APP, and feeds back a corresponding response message to the client, for example, a registration success notification. The cloud resource scheduling system enables the cloud service function for the APP on the terminal device. For example, an identifier of the terminal device, an identifier of the client, and the cloud resource enabling information of the APP may be locally recorded in the cloud resource scheduling system through association. A specific implementation is not limited in this application.

After the cloud resource scheduling system enables the cloud service function for the APP, the client may obtain the resource requirement information of the APP based on the compute instance configuration data of the APP. The compute instance configuration data may be configured in the SDK of the APP when the APP developer develops the APP, or may be obtained through update in a version update iteration of the APP. This is not limited in this application.

For the APP that enables the cloud service function, the client may obtain the resource requirement information of the APP by performing a corresponding resource requirement scanning operation. For example, the client is integrated into the application framework or the SDK of the APP. The resource requirement scanning operation may be, for example, when the APP starts running, normally calling an API of the application framework or the SDK to execute a computing task, and computing a requirement or setting for various configuration items of cloud resources of the APP based on the compute instance configuration data of the APP.

An Android (Android) operating system is used as an example. When the SDK of the APP is started on the terminal device side, a computing task process is as follows:
(1) Call a function clGetPlatformIDs to obtain platform information.
(2) Call a function clCreateContexFromType to create a context based on a resource type.
(3) Call a function clGetContextInfo to obtain device information based on the context.
(4) Create a command queue (command queue) for a corresponding device.
(5) Create a source program and generate a kernel (kernel).
(6) Allocate a buffer (buffer) space and set a program parameter.
(7) Run the kernel and call a function clEnqueueNDRangeKernel.
(8) Read data clEnqueueReadBuffer from the buffer.

The resource requirement information of the APP may be obtained by executing the foregoing computing task, including but not limited to a type of a compute instance required by the APP, configuration information (for example, a hardware signal or a resource requirement) of the compute instance, a quantity of required compute instances, and the like.

It can be understood that, herein, an example in which the client is integrated into the SDK of the APP is merely used to describe implementation of obtaining the resource requirement information of the APP by the client, and does not limit any manner of obtaining information by the client. In another embodiment, when the client is an independent client or has another product form, the resource requirement information of the APP may be obtained in any manner that is suitable for the client. Details are not described herein again.

S220: The client sends the resource requirement information to the cloud resource scheduling system.

In this embodiment of this application, the client may send a resource allocation request to the cloud resource scheduling system, where the resource allocation request may include the resource requirement information of the APP, to request the cloud resource scheduling system to allocate an available compute instance to the APP.

In a specific implementation, the client may perform S320 when the APP starts running. If the APP requests a cloud resource for the first time, the client may send the resource requirement information of the APP to the cloud resource scheduling system when the APP starts running, to access a far-side site based on a compute instance allocated by the cloud resource scheduling system to the APP. If the APP has previously requested a cloud resource and knows at least one previous compute instance allocated by the cloud resource scheduling system to the APP, the client may monitor network quality of the at least one previous compute instance, and may send the resource requirement information of the APP to the cloud resource scheduling system when the network quality of the at least one previous compute instance meets a specified access switching condition, to request the cloud resource scheduling system to re-allocate a compute instance to the APP for access switching.

It can be understood that, when the APP starts running, the client may determine, based on the network quality of the at least one previous compute instance, whether to send the resource requirement information of the APP to the cloud resource scheduling system, or during running of the APP, may determine, based on the network quality of the at least one previous compute instance, whether to send the resource requirement information of the APP to the cloud resource scheduling system. This is not limited in this application. In addition, regardless of requesting of the cloud resource by the APP for the first time or switching of an access site, the client may further synchronously send other information, for example, location information of the terminal device, when sending the resource requirement information to the cloud resource scheduling system. This is not limited in this application either.

S230: The cloud resource scheduling system receives the resource requirement information from the client, and determines at least one compute instance in a plurality of compute instances based on the resource requirement information.

In this embodiment of this application, the plurality of compute instances are deployed on at least one site managed by the cloud resource scheduling system, and any compute instance may be used to process some processing tasks of the APP. In addition, any compute instance may be any one or a combination of computing resources of different granularities such as a virtual machine, a container, a thread, and a process, or may be processors such as a CPU, a GPU, and an NPU. The cloud resource scheduling system may perform, based on the resource requirement information from the client, resource scheduling on the APP running on the terminal device, and allocate, to the APP, the at least one compute instance for implementing the some processing tasks of the APP, for example, any one or a combination of computing resources deployed on a same site or different sites, for use by the APP on the terminal device side.

In an implementation, the resource requirement information may include a type of a compute instance, configuration information of a compute instance, and a quantity of required compute instances. The cloud resource scheduling system may select, from the plurality of compute instances deployed on the at least one far-side site managed by the cloud resource scheduling system, the at least one compute instance that meets the type of the compute instance and the configuration information of the compute instance, where a quantity of the at least one compute instance is not less than the quantity of compute instances required by the APP.

For example, if the type of the compute instance included in the resource requirement information is a GPU, the cloud resource scheduling system may obtain, through filtering, a compute instance whose type is a GPU from the plurality of compute instances deployed on the site managed by the cloud resource scheduling system, further obtain, through filtering, at least one compute instance that meets the configuration information of the compute instance and whose quantity is not less than the quantity of required compute instances, and determine a compute instance to be allocated to the APP.

It can be understood that, if the cloud resource scheduling system obtains, through filtering based on the resource requirement information of the APP, a plurality of compute instances that meet a related requirement, the cloud resource scheduling system may use all the plurality of compute instances as compute instances to be allocated to the APP. Alternatively, for example, the cloud resource scheduling system may randomly select at least one compute instance whose quantity is not less than the required quantity from the plurality of selected compute instances that are obtained through filtering and that meet the related requirement, and determine the compute instance to be allocated to the APP. Alternatively, for example, the cloud resource scheduling system may further obtain, through filtering based on network quality information of the plurality of compute instances, at least one compute instance whose network quality is better and whose quantity is not less than the quantity of required compute instances from the plurality of compute instances that are obtained through filtering and that meet the related requirement, and determine the compute instance to be allocated to the APP. Network quality information of any compute instance may include, for example, latency information, packet loss information, and jitter information. This is not limited in this application.

It should be understood that the foregoing is merely an example of an implementation in which the cloud resource scheduling system allocates, to the APP on the terminal device side, the compute instance that meets the related requirement, but is not limited thereto. When the resource requirement information sent by the client includes other requirement information of the APP, the cloud resource scheduling system may allocate a compute instance to the APP based on any received resource requirement information. Details are not described herein again.

In an implementation, the cloud resource scheduling system may further receive the location information from the client, and allocate the at least one compute instance based on the resource requirement information of the APP and the location information of the terminal device. The location information of the terminal device may be obtained by the APP after being authorized by the terminal user and provided for the client. A manner of obtaining the location information is not limited in this application. In addition, that the cloud resource scheduling system allocates the at least one compute instance based on the resource requirement information of the APP and the location information of the terminal device may be: selecting at least one candidate site from a plurality of sites based on the resource requirement information and the location information; and determining, based on the resource requirement information, the at least one compute instance in compute instances deployed on the at least one candidate site.

Herein, the cloud resource scheduling system may select the candidate site based on a specified location condition. The location condition may be, for example, a condition that a location of the terminal device and a location of the candidate site should meet, or may be a location distance between the two, or a zone range corresponding to the two. This is not limited in this application. In an example, for example, the cloud resource scheduling system may allocate, based on the location of the terminal device and an available zone (available zone, AZ) in which each site is located, at least one nearby candidate site to the APP, and then determine a compute instance to be allocated to the APP in compute instances deployed on the at least one candidate site. Because a distance between the terminal device and the candidate site is short, if the compute instance deployed on the candidate site is selected as the compute instance to be allocated to the APP, latency assurance can be provided to implement the some processing tasks of the APP to some extent.

In an implementation, the cloud resource scheduling system may obtain resource status information of the plurality of compute instances from the plurality of managed sites, and allocate the at least one compute instance to the APP on the terminal device side based on the status information of the plurality of compute instances. For example, after obtaining, through filtering, a compute instance that meets the location condition and/or the resource requirement information, the cloud resource scheduling system may further obtain, through filtering based on status information of the compute instance that is obtained through filtering, at least one compute instance that is not used by an APP of another terminal device. Because the at least one compute instance is not used by the another terminal device as a target compute instance to execute a processing task, if the some processing tasks of the APP are processed based on the at least one compute instance, latency or traffic assurance is provided to implement the some processing tasks of the APP, to ensure that the terminal user can obtain a low-latency and heavy-traffic service while implementing computing extension of the terminal device.

It can be understood that, in this embodiment of this application, the cloud resource scheduling system may separately obtain, from the plurality of managed sites, resource status information of one or more compute instances deployed on the plurality of sites, so that the cloud resource scheduling system performs resource scheduling on the APP by comprehensively using the resource status information from the plurality of sites, the resource requirement information of the APP, and the like. Each site may report the resource status information of the one or more compute instances in the sites to a management device in real time, including an available resource, an allocated resource, a resource status, and the like. Alternatively, the cloud resource scheduling system may send, to the site, instruction information used to indicate the site to report resource status information, and the site reports related information based on the received instruction information. Alternatively, the site may report the resource status information of the one or more local compute instances to the cloud resource scheduling system when a specified condition is met (for example, a status of any local compute instance changes). An information interaction manner between the site and the cloud resource scheduling system is not limited in this application.

It should be understood that, the foregoing is merely an example for describing the method in which the cloud resource scheduling system schedules the compute instance for the APP based on the location information of the terminal device and/or the resource requirement information of the APP, but is not limited thereto. In an actual scheduling process, the location information or the resource requirement information is not obtained or used in sequence, that is, the location information or the resource requirement information may be obtained and used simultaneously. For example, when the APP starts running, the client may send the resource allocation request to the cloud resource scheduling system. The resource allocation request may carry the location information of the terminal device, the resource requirement information of the APP. and the like. After receiving the resource allocation request from the client, the cloud resource scheduling system may comprehensively analyze the location information of the terminal device and the resource requirement information of the APP to allocate the compute instance to the APP.

In an implementation, the cloud resource scheduling system may locally maintain a resource status table, and information about the plurality of sites managed by the cloud resource scheduling system and resource status information of one or more compute instances reported by each site may be summarized in the resource status table. The cloud resource scheduling system may update the resource status table in real time based on the resource status information obtained from the plurality of sites. After receiving the resource allocation request (including the resource requirement information of the APP, the location information of the terminal device, and/or the like) from the client, the cloud resource scheduling system may match information carried in the resource allocation request with information in the resource status table, to allocate, to the APP, the at least one compute instance that meets the related requirement.

It can be understood that, the foregoing is merely an example of an implementation in which the cloud resource scheduling system schedules the compute instance for the APP in this embodiment of this application, but is not limited thereto. In another embodiment, a basis for the cloud resource scheduling system to schedule the compute instance for the APP may include but is not limited to related information such as the APP resource requirement information, the location information of the terminal device, a site location, and network quality of a compute instance. Details are not described herein again.

S240: The cloud resource scheduling system sends resource allocation information to the client, where the resource allocation information includes information about the at least one compute instance.

In this embodiment of this application, the resource allocation information may include information about a compute instance allocated by the cloud resource scheduling system to the APP, for example, include any one or more of the following: a type of a compute instance, an identifier of a compute instance, network quality information of a compute instance, and connection information of a far-side site on which a compute instance is located.

For example, the resource allocation information may include content shown in the following Table 1:

**Table 1**

| Serial number | Type | Identifier | Connection information | Network quality information |
|---|---|---|---|---|
| 1 | GPU | AAA | 1.1.1.1 | XXX |
| 2 | GPU | KKK | 2.2.2.2 | YYY |
| 3 | NPU | BBB | 1.1.1.1 | ZZZ |

As shown in Table 1, the at least one compute instance allocated by the cloud resource scheduling system to the APP may include at least one compute instance deployed on a same site or different sites. The serial number indicates different numbers allocated by the cloud resource scheduling system to different compute instances. The type and the identifier are used to distinguish different compute instances. The connection information indicates connection information of a site on which a compute instance is located, and may be used to enable the client to send, based on the connection information, a connection request to the far-side site on which the compute instance is located. The network quality information indicates network quality of a compute instance, and may also be used to enable the client or the APP to determine whether to start the compute instance.

S250: The client receives the resource allocation information from the cloud resource scheduling system, and during running of the APP, sends some processing tasks of the APP to the at least one compute instance, and receives results of processing the some processing tasks of the APP by the at least one compute instance.

In a specific implementation, in S250, the client may obtain, from the resource allocation information, the identifier of the compute instance, the connection information of the far-side site on which the compute instance is located, and the like, and send the connection request to the far-side site, to request to establish a communication connection to the far-side site. The connection request may carry the identifier of the compute instance, the connection information of the far-side site, and the like. The far-side site may establish a communication connection to the client in response to the connection request from the client, and maintain a connected state. During running of the APP, the client may send, through the communication connection to the far-side site, to-be-processed data of the some processing tasks of the APP to a corresponding compute instance deployed on the far-side site. After processing the to-be-processed data by using the corresponding compute instance, the far-side site feeds back a processing result to the client.

It can be understood that there may be a plurality of compute instances allocated by the cloud resource scheduling system to the APP, and the resource allocation information may include information about the plurality of compute instances allocated by the cloud resource scheduling system. In S250, after receiving the resource allocation information, the client may further select at least one compute instance from the plurality of compute instances as a target compute instance based on the information about the plurality of compute instances. Alternatively, the client may send the information about the plurality of compute instances to the APP, so that the APP selects the at least one compute instance from the plurality of compute instances as a target compute instance based on the information about the plurality of compute instances. Further, the client may establish a communication connection to a target site on which the target compute instance is located, to process the some processing tasks of the APP by using the target compute instance.

It should be noted that, when selecting the target compute instance from the plurality of compute instances allocated by the cloud resource scheduling system, the client or the APP may randomly select at least one compute instance of a corresponding type as the target compute instance based on a requirement of the APP for a type of a compute instance, or may select, from compute instances that meet a type requirement, at least one compute instance with better network quality as the target compute instance based on network quality information of the compute instances. This is not limited in this application.

Therefore, according to the method for scheduling a compute instance shown in FIG. 2, a client corresponding to a cloud resource scheduling system and one or more applications APPs that can provide an application service for a terminal user may be installed on a terminal device. The client may obtain resource requirement information of an APP and send the resource requirement information to the cloud resource scheduling system, so that the cloud resource scheduling system allocates, to the APP based on the received resource requirement information, at least one compute instance that is deployed on a far-side site and meets a requirement, and during running of the APP, some processing tasks of the APP may be sent to the at least one compute instance for processing, to obtain processing results. In this solution, an APP developer may deploy a compute instance on a far-side site, and the cloud resource scheduling system may perform resource scheduling on the APP running on the terminal device, to implement, by using the compute instance deployed on the far-side site, the some processing tasks of the APP running on the terminal device, so that various services with a high computing requirement can be implemented without a limitation of computing performance of the terminal device, and finally, a service with a high computing requirement is unbound from the computing performance of the terminal device, thereby providing unlimited possibilities for a computing terminal. In addition, according to the method, power consumption and resource occupation when the terminal device runs the APP can be significantly reduced.

The foregoing mainly describes the solutions provided in this application from a perspective of interaction between the client and the cloud resource scheduling system. It can be understood that, to implement the foregoing functions, the client and the cloud resource scheduling system include corresponding hardware structures and/or software modules for performing the functions. A person skilled in the art should easily be aware that, in combination with the units and algorithm steps in the examples described in embodiments disclosed in this specification, the present invention can be implemented by hardware or a combination of hardware and computer software. Whether a function is performed by hardware or hardware driven by computer software depends on a particular application and a design constraint of the technical solutions. A person skilled in the art may use different methods to implement the described functions for each particular application, but it should not be considered that the implementation goes beyond the scope of the present invention.

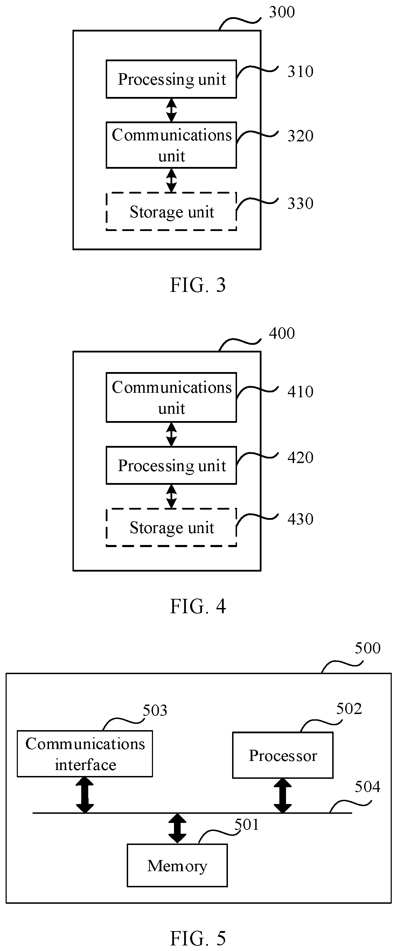

Based on a same technical idea, an embodiment of this application further provides a client. FIG. 3 is a possible schematic block diagram of a client according to an embodiment of this application. As shown in FIG. 3, a client 300 may include a processing unit 310 and a communications unit 320. The processing unit 310 may be configured to control an action of the client 300, and the communications unit 320 may be configured to support communication between the client 300 and another network entity. In an implementation, the client 300 may further include a storage unit 330, and the storage unit may be configured to store program instructions of the client 300.

The processing unit may be a processor or a controller of a terminal apparatus in which the client is located, such as a general-purpose central processing unit (central processing unit, CPU), a general-purpose processor, a digital signal processor (digital signal processor, DSP), an application-specific integrated circuit (application-specific integrated circuits, ASIC), a field programmable gate array (field programmable gate array, FPGA), or another programmable logic device, a transistor logic device, a hardware component, or any combination thereof. The processing unit may implement or execute logical blocks, modules, and circuits in various examples described with reference to content disclosed in this application. Alternatively, the processor may be a combination of processors implementing a computing function, for example, a combination of one or more microprocessors, or a combination of a DSP and a microprocessor. The storage unit may be a memory of the terminal apparatus in which the client is located. The communications unit is an interface circuit of the terminal apparatus in which the client is located, and is configured to receive a signal from another apparatus. For example, when the apparatus is implemented in a form of a chip, the communications unit is an interface circuit used by the chip to receive a signal from another chip or apparatus, or is an interface circuit used by the chip to send a signal to another chip or apparatus.

The terminal apparatus may be the terminal device in any one of the foregoing embodiments, or may be a chip used for the terminal device. For example, when the terminal apparatus is the terminal device, the processing unit may be, for example, a processor, and the communications unit may be, for example, a transceiver. Optionally, the transceiver may include a radio frequency circuit, and the storage unit may be, for example, a memory. For example, when the terminal apparatus is a chip used for the terminal device, the processing unit may be, for example, a processor, and the communications unit may be, for example, an input/output interface, a pin, or a circuit. The processing unit may execute computer-executable instructions stored in the storage unit. Optionally, the storage unit is a storage unit inside the chip, such as a register or a buffer. Alternatively, the storage unit may be a storage unit that is inside the terminal device and that is located outside the chip, such as a read-only memory (read-only memory, ROM), another type of static storage device that can store static information and instructions, or a random access memory (random access memory, RAM).

In an embodiment, the processing unit 310 is configured to obtain resource requirement information of an application APP running on a terminal device, where the resource requirement information is used to indicate a resource requirement of the APP; and the communications unit 320 is configured to: send the resource requirement information to a cloud resource scheduling system; receive resource allocation information from the cloud resource scheduling system, where the resource allocation information includes information about at least one compute instance allocated by the cloud resource scheduling system based on the resource requirement information, and the at least one compute instance is deployed on at least one far-side site managed by the cloud resource scheduling system; and during running of the APP, send some processing tasks of the APP to the at least one compute instance, and receive results of processing the some processing tasks of the APP by the at least one compute instance.

In a possible implementation, the processing unit 310 is configured to: obtain compute instance configuration data of the APP, and obtain the resource requirement information, where the resource requirement information includes at least one of a type of a compute instance, configuration information of a compute instance, and a quantity of required compute instances.

In an optional implementation, the processing unit 310 is configured to: determine that cloud resource enabling information is configured in the APP, and obtain the resource requirement information based on the cloud resource enabling information and the compute instance configuration data of the APP.

In an optional implementation, the processing unit 310 sends a cloud service request to the cloud resource scheduling system by using the communications unit, where the cloud service request is used to request the cloud resource scheduling system to enable a cloud service function for the APP; and after the cloud resource scheduling system enables the cloud service function for the APP, the processing unit obtains the resource requirement information based on the compute instance configuration data of the APP.

In an optional implementation, the communications unit 320 sends the resource requirement information to the cloud resource scheduling system when the APP starts running; or the communications unit sends the resource requirement information to the cloud resource scheduling system when network quality of at least one previous compute instance allocated by the cloud resource scheduling system meets an access switching condition.

In an optional implementation, the communications unit 320 is further configured to send location information of the terminal device to the cloud resource scheduling system, where the at least one compute instance is allocated by the cloud resource scheduling system based on the resource requirement information and the location information.

In an optional implementation, the resource allocation information includes information about a plurality of compute instances allocated by the cloud resource scheduling system based on the resource requirement information, and the processing unit is further configured to select the at least one compute instance from the plurality of compute instances based on the information about the plurality of compute instances. In another optional implementation, the processing unit is further configured to send the information about the plurality of compute instances to the APP, so that the APP selects the at least one compute instance from the plurality of compute instances based on the information about the plurality of compute instances.

In an optional implementation, the information about the at least one compute instance includes any one or more of the following: a type of a compute instance, an identifier of a compute instance, network quality information of a compute instance, and connection information of a far-side site on which a compute instance is located.

It can be understood that, for a specific implementation process in which the client is used in the foregoing information sending method and corresponding beneficial effect, refer to the related descriptions in the foregoing method embodiment. Details are not described herein again.

As shown in FIG. 4, an embodiment of this application further provides a cloud resource scheduling system 400. The cloud resource scheduling system may include a communications unit 410 and a processing unit 420. The communications unit 410 may be configured to support communication between the cloud resource scheduling system and another network entity, and the processing unit 420 may be configured to control an action of the cloud resource scheduling system 400. In an implementation, the cloud resource scheduling system 400 may further include a storage unit 430, and the storage unit may be configured to store program instructions of the cloud resource scheduling system 400.

The processing unit may be a processor or a controller, such as a general-purpose central processing unit (central processing unit, CPU), a general-purpose processor, a digital signal processor (digital signal processor, DSP), an application-specific integrated circuit (application-specific integrated circuits, ASIC), a field programmable gate array (field programmable gate array, FPGA), or another programmable logic device, a transistor logic device, a hardware component, or any combination thereof. The processing unit may implement or execute logical blocks, modules, and circuits in various examples described with reference to content disclosed in this application. Alternatively, the processor may be a combination of processors implementing a computing function, for example, a combination of one or more microprocessors, or a combination of a DSP and a microprocessor. The storage unit may be a memory. The communications unit is an interface circuit and is configured to receive a signal from another apparatus. For example, when the cloud resource scheduling system is implemented in a form of a chip, the communications unit is an interface circuit used by the chip to receive a signal from another chip or apparatus, or is an interface circuit used by the chip to send a signal to another chip or apparatus.

The cloud resource scheduling system may be the computer system in any one of the foregoing embodiments, or may be a chip used for the computer system. For example, when the cloud resource scheduling system is a computer system, the processing unit may be, for example, a processor, and the communications unit may be, for example, a transceiver. Optionally, the transceiver may include a radio frequency circuit, and the storage unit may be, for example, a memory. For example, when the cloud resource scheduling system is a chip used for the computer system, the processing unit may be, for example, a processor, and the communications unit may be, for example, an input/output interface, a pin, or a circuit. The processing unit may execute computer-executable instructions stored in the storage unit. Optionally, the storage unit is a storage unit inside the chip, such as a register or a buffer. Alternatively, the storage unit may be a storage unit that is inside the computer system and that is located outside the chip, such as a read-only memory (read-only memory, ROM), another type of static storage device that can store static information and instructions, or a random access memory (random access memory, RAM).

In an example, the communications unit 410 is configured to receive resource requirement information from a client, where the resource requirement information is used to indicate a resource requirement of an application APP running on a terminal device; the processing unit 420 is configured to determine at least one compute instance in a plurality of compute instances based on the resource requirement information, where the plurality of compute instances are deployed on at least one far-side site managed by the cloud resource scheduling system, and any compute instance is used to process some processing tasks of the APP; and the communications unit 410 is further configured to send resource allocation information to the client, where the resource allocation information includes information about the at least one compute instance.

In an optional implementation, the communications unit 410 is further configured to receive a cloud service request from the client, where the cloud service request includes cloud resource enabling information configured in the APP; and the processing unit 420 is further configured to enable a cloud service function for the APP based on the cloud resource enabling information.

In an optional implementation, the at least one far-side site is a plurality of far-side sites, and the communications unit 410 is further configured to receive location information from the client; and the processing unit 420 is further configured to: select at least one candidate site from a plurality of sites based on the resource requirement information and the location information; and determine, by the cloud resource scheduling system based on the resource requirement information, the at least one compute instance in compute instances deployed on the at least one candidate site.

It can be understood that, for a specific implementation process in which the client is used in the foregoing information sending method and corresponding beneficial effect, refer to the related descriptions in the foregoing method embodiment. Details are not described herein again.

FIG. 5 is a schematic diagram of an apparatus according to this application. The apparatus may be any computer in the terminal device or the computer system in the foregoing embodiment, or may be the client or the cloud resource scheduling system in the foregoing embodiment. An apparatus 500 includes a processor 502, a communications interface 503, and a memory 501. Optionally, the apparatus 500 may further include a communications line 504. The communications interface 503, the processor 502, and the memory 501 may be connected to each other by using the communications line 504. The communications line 504 may be a peripheral component interconnect (peripheral component interconnect, PCI for short) bus, an extended industry standard architecture (extended industry standard architecture, EISA for short) bus, or the like. The communications line 504 may be classified into an address bus, a data bus, a control bus, and the like. For ease of representation, only one bold line is used for representation in FIG. 5, but this does not mean that there is only one bus or only one type of bus.

The processor 502 may be a CPU, a microprocessor, an ASIC, or one or more integrated circuits configured to control program execution in the solutions of this application.

The communications interface 503 uses any apparatus like a transceiver, and is configured to communicate with another device or a communications network, such as the Ethernet, a radio access network (radio access network, RAN), a wireless local area network (wireless local area networks, WLAN), or a wired access network.

The memory 501 may be a ROM, another type of static storage device that can store static information and instructions, a RAM, or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in a form of instructions or a data structure and that can be accessed by a computer, but is not limited thereto. The memory may exist independently, and is connected to the processor through the communications line 504. Alternatively, the memory may be integrated with the processor.

The memory 501 is configured to store computer-executable instructions for performing the solutions of this application, and the processor 502 controls execution. The processor 502 is configured to execute the computer-executable instructions stored in the memory 501, to implement the method for scheduling a compute instance provided in the foregoing embodiment of this application.

Optionally, the computer-executable instructions in the embodiments of this application may also be referred to as application code. This is not specifically limited in the embodiments of this application.

A person of ordinary skill in the art may understand that various numbers such as "first" and "second" in this application are merely used for differentiation for ease of description, and are not used to limit the scope of embodiments of this application or represent a sequence. The term "and/or" describes an association relationship between associated objects and represents that three relationships may exist. For example, A and/or B may represent the following three cases: Only A exists, both A and B exist, and only B exists. The character "/" usually indicates an "or" relationship between associated objects. "At least one" means one or more. "At least two" means two or more. "At least one", "any one", or a similar expression thereof indicates any combination of the items, and includes a single item (piece) or any combination of a plurality of items (pieces). For example, at least one (piece, or type) of a, b, or c may represent: a, b, c, a and b, a and c, b and c, or a, b, and c, where a, b, and c may be singular or plural. "A plurality of" means two or more, and another quantifier is similar to this. In addition, an element (element) that appears in singular forms "a", "an", and "the" does not mean "one or only one" unless otherwise specified in the context, but means "one or more". For example, "a device" means one or more such devices.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedures or functions in the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

The various illustrative logical units and circuits in embodiments of this application may implement or operate the functions via a general-purpose processor, a digital signal processor, an application-specific integrated circuit (ASIC), a field programmable gate array (FPGA) or another programmable logical apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, a plurality of microprocessors, one or more microprocessors in combination with a digital signal processor core, or any other similar configuration.

Steps of the methods or algorithms described in embodiments of this application may be directly embedded into hardware, a software unit executed by the processor, or a combination thereof. The software unit may be stored in a RAM, a flash memory, a ROM, an EPROM, an EEPROM, a register, a hard disk drive, a removable magnetic disk, a CD-ROM, or a storage medium of any other form in the art. For example, the storage medium may be connected to the processor, so that the processor can read information from the storage medium and write information into the storage medium. Optionally, the storage medium may alternatively be integrated into the processor. The processor and the storage medium may be disposed in the ASIC.

These computer program instructions may alternatively be loaded onto the computer or the another programmable data processing device, so that a series of operation steps are performed on the computer or the another programmable device to generate computer-implemented processing, and instructions executed on the computer or the another programmable device provide steps for implementing a function specified in one or more procedures in the flowchart and/or one or more blocks in the block diagram.

## Claims

1. A method for scheduling a compute instance performed by a client of a terminal device, the terminal device comprising the client and an application, APP, the method comprising the steps of:
• obtaining (S210), by the client, resource requirement information of the APP running on the terminal device, wherein the resource requirement information is used to indicate a resource requirement of the APP;
• sending (S 220), by the client, the resource requirement information to a cloud resource scheduling system;
• receiving (S 250), by the client, resource allocation information from the cloud resource scheduling system,
∘ wherein the resource allocation information comprises information about a plurality of compute instances allocated by the cloud resource scheduling system based on the resource requirement information, and the plurality of compute instances are deployed on at least one far-side site managed by the cloud resource scheduling system;
• after having received the resource allocation information:
∘ either, in a first alternative, selecting, by the client among the plurality of compute instances, a target compute instance based on the received information about the plurality of compute instances, or,
∘ in a second alternative:
▪ sending, by the client, the information about the plurality of compute instances to the APP, wherein the APP selects the target compute instance from the plurality of compute instances based on the information about the plurality of compute instances;
• sending (S 250), by the client during running of the APP, some processing tasks of the APP to the target compute instance, and
• receiving, by the client, results of processing the some processing tasks of the APP by the target compute instance, from the target compute instance.

2. The method according to claim 1, wherein the obtaining (S 210), by the client, the resource requirement information of the APP comprises:
∘ obtaining compute instance configuration data of the APP,
∘ determining that cloud resource enabling information is configured in the APP, and
∘ obtaining the resource requirement information based on the cloud resource enabling information and the compute instance configuration data of the APP, wherein the resource requirement information comprises at least one of a type of a compute instance, configuration information of the compute instance, and a quantity of required compute instances.

3. The method according to claim 2, wherein the determining, by the client, that cloud resource enabling information is configured in the APP, and obtaining, by the client, the resource requirement information based on the cloud resource enabling information and the compute instance configuration data of the APP comprises:
∘ sending a cloud service request to the cloud resource scheduling system, wherein the cloud service request is used to request the cloud resource scheduling system to enable a cloud service function for the APP; and
∘ after the cloud resource scheduling system enables the cloud service function for the APP, obtaining the resource requirement information based on the cloud resource enabling information and the compute instance configuration data of the APP.

4. The method according to any one of claims 1 to 3, wherein the sending (S220), by the client, the resource requirement information to the cloud resource scheduling system comprises:
∘ sending the resource requirement information to the cloud resource scheduling system when the APP starts running; or
∘ sending the resource requirement information to the cloud resource scheduling system when network quality of at least one previous compute instance allocated by the cloud resource scheduling system meets an access switching condition.

5. The method according to claim 4, wherein the method further comprises:
∘sending, by the client, location information of the terminal device to the cloud resource scheduling system, wherein the plurality of compute instances is allocated by the cloud resource scheduling system based on the resource requirement information and the location information.

6. The method according to any one of claims 1 to 5, wherein the information about the plurality of compute instances comprises any one or more of the following: a type of a compute instance, an identifier of the compute instance, network quality information of the compute instance, and connection information of a far-side site on which the compute instance is located.

7. A method for scheduling a compute instance performed by a cloud resource scheduling system, the method comprising the steps of:
• receiving (S 230) resource requirement information from a client of a terminal device, wherein the resource requirement information is used to indicate a resource requirement of an application, APP, running on the terminal device;
• determining a plurality of compute instances based on the resource requirement information, wherein the plurality of compute instances are deployed on at least one far-side site managed by the cloud resource scheduling system, and any compute instance among the plurality of compute instances is used to process some processing tasks of the APP; and
• sending (S 240) resource allocation information to the client, wherein the resource allocation information comprises information about the plurality of compute instances.

8. The method according to claim 7, wherein the method further comprises:
∘ receiving a cloud service request from the client, wherein the cloud service request comprises cloud resource enabling information configured in the APP; and
∘ enabling a cloud service function for the APP based on the cloud resource enabling information.

9. The method according to claim 7 or 8, wherein the at least one far-side site is a plurality of far-side sites, and the method further comprises:
∘receiving location information from the client; and
the determining the plurality of compute instances based on the resource requirement information comprises:
∘ selecting at least one candidate site from a plurality of sites based on the resource requirement information and the location information; and
∘ determining, based on the resource requirement information, the plurality of compute instance among compute instances deployed on the at least one candidate site.

10. A client in a terminal device, the terminal device comprising the client and an application, APP, wherein the client is configured to perform any of the methods according to claims 1 - 6.

11. A cloud resource scheduling system configured to perform any of the methods according to claims 7 - 9.

## Patentansprüche

1. Verfahren zum Planen einer Recheninstanz, das durch einen Client einer Endgeräteeinrichtung durchgeführt wird, wobei die Endgeräteeinrichtung den Client und eine Anwendung, APP, umfasst, wobei das Verfahren die folgenden Schritte umfasst:
• Erlangen (S210), durch den Client, von Informationen zum Ressourcenbedarf der APP, die auf der Endgeräteeinrichtung ausgeführt wird, wobei die Informationen zum Ressourcenbedarf dazu verwendet werden, einen Ressourcenbedarf der APP anzugeben;
• Senden (S 220), durch den Client, der Informationen zum Ressourcenbedarf an ein Cloud-Ressourcenplanungssystem;
• Empfangen (S 250), durch den Client, von Informationen zur Ressourcenzuweisung von dem Cloud-Ressourcenplanungssystem,
∘ wobei die Informationen zur Ressourcenzuweisung Informationen über eine Vielzahl von Recheninstanzen umfassen, die durch das Cloud-Ressourcenplanungssystem basierend auf den Informationen zum Ressourcenbedarf zugewiesen werden, und die Vielzahl von Recheninstanzen an einem Standort auf der Gegenseite, der durch das Cloud-Ressourcenplanungssystem verwaltet wird, eingesetzt wird;
• nachdem die Informationen zur Ressourcenzuweisung erlangt worden sind:
∘ entweder, in einer ersten Alternative, Auswählen, durch den Client aus der Vielzahl von Recheninstanzen, einer Ziel-Recheninstanz basierend auf den empfangenen Informationen über die Vielzahl von Recheninstanzen oder
∘ in einer zweiten Alternative:
▪ Senden, durch den Client, der Informationen über die Vielzahl von Recheninstanzen an die APP, wobei die APP die Ziel-Recheninstanz aus der Vielzahl von Recheninstanzen basierend auf den Informationen über die Vielzahl von Recheninstanzen auswählt;
• Senden (S 250), durch den Client während der Ausführung der APP, von einigen Verarbeitungsaufgaben der APP an die Ziel-Rechnerinstanz und
• Empfangen, durch den Client, von Ergebnissen der Verarbeitung der einigen Verarbeitungsaufgaben der APP durch die Ziel-Recheninstanz von der Ziel-Recheninstanz.

2. Verfahren nach Anspruch 1, wobei das Erlangen (S 210), durch den Client, der Informationen zum Ressourcenbedarf der APP Folgendes umfasst:
∘Erlangen von Konfigurationsdaten der Recheninstanz der APP,
∘ Feststellen, dass Informationen zur Aktivierung von Cloud-Ressourcen in der APP konfiguriert sind, und
∘Erlangen der Informationen zum Ressourcenbedarf basierend auf den Informationen zur Aktivierung von Cloud-Ressourcen und den Konfigurationsdaten der Recheninstanz der APP, wobei die Informationen zum Ressourcenbedarf mindestens eines von einem Typ einer Recheninstanz, Konfigurationsinformationen der Recheninstanz und einer Menge von erforderlichen Recheninstanzen umfassen.

3. Verfahren nach Anspruch 2, wobei das Feststellen, durch den Client, dass Informationen zur Aktivierung von Cloud-Ressourcen in der APP konfiguriert sind, und das Erlangen, durch den Client, der Informationen zum Ressourcenbedarf basierend auf den Informationen zur Aktivierung von Cloud-Ressourcen und den Konfigurationsdaten der Recheninstanz der APP Folgendes umfasst:
∘ Senden einer Cloud-Dienstanforderung an das Cloud-Ressourcenplanungssystem, wobei die Cloud-Dienstanforderung dazu verwendet wird, das Cloud-Ressourcenplanungssystem aufzufordern, eine Cloud-Dienstfunktion für die APP zu aktivieren; und
∘ nachdem das Cloud-Ressourcenplanungssystem die Cloud-Dienstfunktion für die APP aktiviert hat, Erlangen der Informationen zum Ressourcenbedarf basierend auf den Informationen zur Aktivierung von Cloud-Ressourcen und den Konfigurationsdaten der Recheninstanz der APP.

4. Verfahren nach einem der Ansprüche 1 bis 3, wobei das Senden (S220), durch den Client, der Informationen zum Ressourcenbedarf an das Cloud-Ressourcenplanungssystem Folgendes umfasst:
∘ Senden der Informationen zum Ressourcenbedarf an das Cloud-Ressourcenplanungssystem, wenn die Ausführung der APP gestartet wird; oder
∘ Senden der Informationen zum Ressourcenbedarf an das Cloud-Ressourcenplanungssystem, wenn eine Netzwerkqualität von mindestens einer vorherigen Recheninstanz, die durch das Cloud-Ressourcenplanungssystem zugewiesen wird, eine Bedingung für den Zugriffswechsel erfüllt.

5. Verfahren nach Anspruch 4, wobei das Verfahren ferner Folgendes umfasst:
∘ Senden, durch den Client, von Positionsinformationen der Endgeräteeinrichtung an das Cloud-Ressourcenplanungssystem, wobei die Vielzahl von Recheninstanzen durch das Cloud-Ressourcenplanungssystem basierend auf den Informationen zum Ressourcenbedarf und den Positionsinformationen zugewiesen wird.

6. Verfahren nach einem der Ansprüche 1 bis 5, wobei die Informationen über die Vielzahl von Recheninstanzen eines oder mehrere der Folgenden umfassen: einen Typ einer Recheninstanz, eine Kennung der Recheninstanz, Informationen zu der Netzwerkqualität der Recheninstanz und Verbindungsinformationen eines Standorts auf der Gegenseite, auf dem sich die Recheninstanz befindet.

7. Verfahren zum Planen einer Recheninstanz, das durch ein Cloud-Ressourcenplanungssystem durchgeführt wird, wobei das Verfahren die folgenden Schritte umfasst:
• Empfangen (S 230) von Informationen zum Ressourcenbedarf von einem Client einer Endgeräteeinrichtung, wobei die Informationen zum Ressourcenbedarf dazu verwendet werden, einen Ressourcenbedarf einer Anwendung, APP, die auf dem Endgerät ausgeführt wird, anzugeben;
• Feststellen einer Vielzahl von Recheninstanzen basierend auf den Informationen zum Ressourcenbedarf, wobei die Vielzahl von Recheninstanzen an mindestens einem Standort auf der Gegenseite, der durch das Cloud-Ressourcenplanungssystem verwaltet wird, eingesetzt wird und jede Recheninstanz aus der Vielzahl von Recheninstanzen dazu verwendet wird, einige Verarbeitungsaufgaben der APP zu verarbeiten; und
• Senden (S 240) von Informationen zur Ressourcenzuweisung an den Client, wobei die Informationen zur Ressourcenzuweisung Informationen über die Vielzahl von Recheninstanzen umfassen.

8. Verfahren nach Anspruch 7, wobei das Verfahren ferner Folgendes umfasst:
∘ Empfangen einer Cloud-Dienstanfrage von dem Client, wobei die Cloud-Dienstanfrage Informationen zur Aktivierung von Cloud-Ressourcen, die in der APP konfiguriert sind, umfasst; und
∘Aktivieren einer Cloud-Dienstfunktion für die APP basierend auf den Informationen zur Aktivierung von Cloud-Ressourcen.

9. Verfahren nach einem der Ansprüche 7 oder 8, wobei der mindestens eine Standort auf der Gegenseite eine Vielzahl von Standorten auf der Gegenseite ist und das Verfahren ferner Folgendes umfasst:
∘ Empfangen von Positionsinformationen von dem Client; und
das Feststellen der Vielzahl von Recheninstanzen basierend auf den Informationen zum Ressourcenbedarf Folgendes umfasst:
∘ Auswählen mindestens eines Kandidatenstandorts aus einer Vielzahl von Standorten basierend auf den Informationen zum Ressourcenbedarf und den Positionsinformationen; und
∘ Feststellen, basierend auf den Informationen zum Ressourcenbedarf, der Vielzahl von Recheninstanzen aus den Recheninstanzen, die an dem mindestens einen Kandidatenstandort eingesetzt werden.

10. Client in einer Endgeräteeinrichtung, wobei die Endgeräteeinrichtung den Client und eine Anwendung, APP, umfasst, wobei der Client dazu konfiguriert ist, eines der Verfahren nach den Ansprüchen 1-6 durchzuführen.

11. Cloud-Ressourcenplanungssystem, das dazu konfiguriert ist, eines der Verfahren nach den Ansprüchen 7-9 durchzuführen.

## Revendications

1. Procédé de planification d'une instance de calcul réalisé par un client d'un dispositif terminal, le dispositif terminal comprenant le client et une application, APP, le procédé comprenant les étapes suivantes :
• l'obtention (S210), par le client, d'informations sur les besoins en ressources de l'APP fonctionnant sur le dispositif terminal, dans lequel les informations sur les besoins en ressources sont utilisées pour indiquer un besoin en ressources de l'APP ;
• l'envoi (S 220), par le client, des informations sur les besoins en ressources à un système de planification de ressources en nuage ;
• la réception (S 250), par le client, d'informations d'attribution de ressources en provenance du système de planification de ressources en nuage,
∘ dans lequel les informations d'attribution de ressources comprennent des informations sur une pluralité d'instances de calcul allouées par le système de planification de ressources en nuage sur la base des informations sur les besoins en ressources, et la pluralité d'instances de calcul sont déployées sur au moins un site distant géré par le système de planification de ressources en nuage ;
• après avoir reçu les informations d'attribution de ressources :
∘ soit, dans une première alternative, la sélection, par le client parmi la pluralité d'instances de calcul, d'une instance de calcul cible sur la base des informations reçues sur la pluralité d'instances de calcul, soit,
∘ dans une seconde alternative :
▪ l'envoi, par le client, des informations sur la pluralité d'instances de calcul à l'APP, dans lequel l'APP sélectionne l'instance de calcul cible parmi la pluralité d'instances de calcul sur la base des informations sur la pluralité d'instances de calcul ;
• l'envoi (S 250), par le client pendant l'exécution de l'APP, de certaines tâches de traitement de l'APP à l'instance de calcul cible, et
• la réception, par le client, de résultats de traitement des certaines tâches de traitement de l'APP par l'instance de calcul cible, à partir de l'instance de calcul cible.

2. Procédé selon la revendication 1, dans lequel l'obtention (S 210), par le client, des informations sur les besoins en ressources de l'APP comprend :
∘ l'obtention de données de configuration d'instance de calcul de l'APP,
∘ la détermination que les informations d'activation de ressources en nuage sont configurées dans l'APP, et
∘ l'obtention des informations sur les besoins en ressources sur la base des informations d'activation de ressources en nuage et des données de configuration d'instance de calcul de l'APP, dans lequel les informations sur les besoins en ressources comprennent au moins l'un d'un type d'une instance de calcul, d'informations de configuration de l'instance de calcul, et d'une quantité d'instances de calcul requises.

3. Procédé selon la revendication 2, dans lequel la détermination, par le client, que les informations d'activation de ressources en nuage sont configurées dans l'APP, et l'obtention, par le client, des informations sur les besoins en ressources sur la base des informations d'activation de ressources en nuage et des données de configuration d'instance de calcul de l'APP comprennent :
∘ l'envoi d'une demande de service en nuage au système de planification de ressources en nuage, dans lequel la demande de service en nuage est utilisée pour demander au système de planification de ressources en nuage d'activer une fonction de service en nuage pour l'APP ; et
∘ après que le système de planification de ressources en nuage a activé la fonction de service en nuage pour l'APP, l'obtention des informations sur les besoins en ressources sur la base des informations d'activation de ressources en nuage et des données de configuration d'instance de calcul de l'APP.

4. Procédé selon l'une quelconque des revendications 1 à 3, dans lequel l'envoi (S220), par le client, des informations sur les besoins en ressources au système de planification de ressources en nuage comprend :
∘ l'envoi des informations sur les besoins en ressources au système de planification de ressources en nuage lorsque l'APP s'exécute ; ou
∘ l'envoi des informations sur les besoins en ressources au système de planification de ressources en nuage lorsque la qualité du réseau d'au moins une instance de calcul précédente attribuée par le système de planification de ressources en nuage répond à une condition de commutation d'accès.

5. Procédé selon la revendication 4, dans lequel le procédé comprend également :
∘ l'envoi, par le client, d'informations d'emplacement du dispositif terminal au système de planification de ressources en nuage, dans lequel la pluralité d'instances de calcul est attribuée par le système de planification de ressources en nuage sur la base des informations sur les besoins en ressources et des informations d'emplacement.

6. Procédé selon l'une quelconque des revendications 1 à 5, dans lequel les informations sur la pluralité d'instances de calcul comprennent l'un quelconque ou plusieurs des éléments suivants : un type d'une instance de calcul, un identifiant de l'instance de calcul, des informations de qualité du réseau de l'instance de calcul, et des informations de connexion d'un site distant sur lequel l'instance de calcul est située.

7. Procédé de planification d'une instance de calcul réalisé par un système de planification de ressources en nuage, le procédé comprenant les étapes suivantes :
• la réception (S 230) d'informations sur les besoins en ressources en provenance d'un client d'un dispositif terminal, dans lequel les informations sur les besoins en ressources sont utilisées pour indiquer un besoin en ressources d'une application, APP, exécutée sur le dispositif terminal ;
• la détermination d'une pluralité d'instances de calcul sur la base des informations sur les besoins en ressources, dans lequel la pluralité d'instances de calcul sont déployées sur au moins un site distant géré par le système de planification de ressources en nuage, et toute instance de calcul parmi la pluralité d'instances de calcul est utilisée pour traiter certaines tâches de traitement de l'APP ; et
• l'envoi (S 240) d'informations d'attribution de ressources au client, dans lequel les informations d'attribution de ressources comprennent des informations sur la pluralité d'instances de calcul.

8. Procédé selon la revendication 7, dans lequel le procédé comprend également :
∘ la réception d'une demande de service en nuage en provenance du client, dans lequel la demande de service en nuage comprend des informations d'activation de ressources en nuage configurées dans l'APP ; et
∘ l'activation d'une fonction de service en nuage pour l'APP sur la base des informations d'activation de ressources en nuage.

9. Procédé selon la revendication 7 ou 8, dans lequel l'au moins un site distant est une pluralité de sites distants, et le procédé comprend également :
∘ la réception d'informations d'emplacement en provenance du client ; et
la détermination de la pluralité d'instances de calcul sur la base des informations sur les besoins en ressources comprend :
∘ la sélection d'au moins un site candidat parmi une pluralité de sites sur la base des informations sur les besoins en ressources et des informations d'emplacement ; et
∘ la détermination, sur la base des informations sur les besoins en ressources, de la pluralité d'instances de calcul parmi les instances de calcul déployées sur l'au moins un site candidat.

10. Client dans un dispositif terminal, le dispositif terminal comprenant le client et une application, APP, dans lequel le client est configuré pour réaliser l'un quelconque des procédés selon les revendications 1 à 6.

11. Système de planification de ressources en nuage configuré pour réaliser l'un quelconque des procédés selon les revendications 7 à 9.
